# EUROPÄISCHE PATENTSCHRIFT

(11) **EP 1 078 688 B1**
(45) Veröffentlichungstag und Bekanntmachung des Hinweises auf die Patenterteilung: **09.05.2012**
(21) Anmeldenummer: 00117272.5
(22) Anmeldetag: 16.08.2000
(51) Int. Cl.: B01J 41/04, B01J 41/14, C08F 212/08, C08F 8/30, C08F 8/12, C08F 8/02, C08F 8/44, C02F 1/42, B01J 39/04, C08F 212/36

(54) **Verfahren zur Herstellung von monodispersen Anionenaustauschern**
Method for producing monodisperse anion exchangers
Méthode pour la préparation d'échangeurs d'anions monodisperses

(30) Priorität: 27.08.1999 DE 19940864; 12.11.1999 DE 19954393
(43) Veröffentlichungstag der Anmeldung: 28.02.2001
(73) Patentinhaber: LANXESS Deutschland GmbH, 51369 Leverkusen (DE)
(72) Erfinder: Klipper, Reinhold, Dr., 50933 Köln (DE); Strüver, Werner, Dr., 51375 Leverkusen (DE); Schnegg, Ulrich, Dr., 51377 Leverkusen (DE); Seidel, Rüdiger, Dr., 51375 Leverkusen (DE); Mitschker, Alfred, Dr., 51519 Odenthal (DE); Lütjens, Holger, Dr., 51065 Köln (DE)

(56) Entgegenhaltungen:
- EP-A- 0 046 535
- US-A- 4 077 918
- US-A- 4 232 125

## Beschreibung

Die vorliegende Erfindung betrifft ein Verfahren zur Herstellung von, monodispersen Anionenaustauschern sowie ihre Verwendung.

Aus US-A 4 444 961 ist unter anderem ein Verfahren zur Herstellung monodisperser Anionenaustauscher bekannt. Hierbei werden haloalkylierte Polymere mit Alkylamin umgesetzt.

In der EP-A 0 046 535 wird unter Hinweis auf US-A 3 989 650 die Herstellung eines makroporösen stark basischen Anionenaustauschers einheitlicher Teilchengröße nach einem Direktverdüsungs- und Mikroverkapselungsverfahren beschrieben.

Das Perlpolymerisat wird dabei durch Umsetzung mit N-Acetoxymethylphthalimid und weiteren Umsetzungsschritten zu einem stark basischen Anionenaustauscher mit Trimethylammoniumgruppen umgesetzt.

US-A-4 077 918 betrifft ein Verfahren zur Herstellung von vernetzten, wasserunlöslichen Kunstharzen mit anionenaustauschenden Eigenschaften durch Einführung von Aminoalkylgruppen in vernetzte, unlösliche aromatische Kerne enthaltende organische Polymere.

US-A-4 232 125 betrifft ein vernetztes Polymer einer diacylaminoalkylierten Monovinyliden-aromatischen Verbindung, indem man das Polymer mit einem Aldehyd und einem Diacylamin in Gegenwart einer Säure als Katalysator in Kontakt bringt.

Das in EP-A 0 046 535 beschriebene Verfahren hat verschiedene Nachteile.
a) Zum einen ist es umweltbelastend und nicht ressourcenschonend, da bei der Umsetzung zwangsweise Essigsäure freigesetzt wird, die abwasserbelastend ist und insgesamt ein wirtschaftliches Verfahren nicht ermöglicht. Zudem muss damit gerechnet werden, dass Reste der Essigsäure im Produkt verbleiben und dieses verunreinigen. Ferner können Reste der Essigsäure aus dem Anionenaustauscher an Flüssigkeiten abgegeben werden, die eigentlich zur Reinigung über die Anionenaustauscher filtriert werden.
b) Die Ausbeute an Anionenaustauscher Endprodukt in Liter pro eingesetztem Edukt ist ungenügend und kann nicht mehr wesentlich gesteigert werden.
c) Ferner ist die nutzbare Kapazität der Anionenaustauscher, also ihre Aufnahmefähigkeit für Anionen, nicht ausreichend hoch.

Aufgabe der Erfindung war also das Bereitstellen einer Methode zur Herstellung von monodispersen Anionenaustauschern, bevorzugt von monodispersen makroporösen Anionenaustauschern mit hoher mechanischer und osmotischer Stabilität der Perlen, einer erhöhten Aufnahmekapazität für Anionen bei gleichzeitig vermindertem Ressourceneinsatz zur Herstellung der Anionenaustauscher selbst, einer hohen Ausbeute bei ihrer Herstellung sowie einer hohen Reinheit der funktionellen basischen Gruppen. Außerdem sind die Produkte frei von einer Nachvernetzung.

Gegenstand der vorliegenden Erfindung ist ein Verfahren zur Herstellung monodisperser Anionenaustauscher, dadurch gekennzeichnet, dass man
a) mit einem Komplexkoazervat mikroverkapselte Monomertröpfchen mit einer mittleren Teilchengröße von 10-1000 µm aus mindestens einer monovinylaromatischen Verbindung und mindestens einem Vernetzer in Gegenwart mindestens eines Schutzkolloids und in Gegenwart mindestens eines Initiators sowie gegebenenfalls einem Porogen zu einem monodispersen, vernetzten Perlpolymerisat umsetzt, wobei als monovinylaromatische Verbindung Styrol eingesetzt wird,
b) dieses monodisperse, vernetzte Perlpolymerisat in einem inerten Lösungsmittel, das geeignet ist das Polymer zu quellen, bei Temperaturen zwischen 20 bis 120°C mit einem Bis(phthalimido)ether amidomethyliert,
c) das amidomethylierte Perlpolymerisat mit einer wässrigen oder alkoholischen Lösung von Natriumhydroxid bei Temperaturen zwischen 100 und 250°C zu aminomethyliertem Perlpolymerisat umsetzt, wobei die Konzentration der Natronlauge im Bereich von 10 bis 50 Gew.-% liegt und das entstehende aminomethylierte Perlpolymerisat mit vollentsalztem Wasser alkalifrei gewaschen wird und
d) das aminomethylierte Perlpolymerisat durch Umsetzung in Suspension mit Alkylierungsmitteln, wobei als Suspensionsmedium Wasser oder Mineralsäuren eingesetzt werden, bei Temperaturen von 20 bis 150°C und bei Drücken von Normaldurck bis 6 bar alkyliert.

Weiterhin Gegenstand der vorliegenden Erfindung sind die amidomethylierten Perlpolymerisate aus Verfahrensschritt b), die aminomethylierten Verfahrensprodukte aus Verfahrensschritt c) aber auch die durch Alkylierung erhaltenen aminomethylierten Perlpolymerisate aus Verfahrensschritt d), die in Anionenaustauschern eingesetzt werden.

Überraschenderweise zeigen die gemäß vorliegender Erfindung hergestellten monodispersen, Anionenaustauscher eine höhere Ausbeute, eine geringere Belastung der Umwelt sowie eine höhere nutzbare Kapazität in der Anwendung, als die aus dem oben genannten Stand der Technik bekannten Harze.

Das monodisperse, vernetzte, vinylaromatische Grundpolymerisat gemäß Verfahrensschritt a) kann nach den aus der Literatur bekannten Verfahren hergestellt werden. Beispielsweise werden solche Verfahren in US-A 4 444 961, EP-A 0 046 535, US-A 4 419 245 oder WO 93/12167 beschrieben, deren Inhalte von der vorliegenden Anmeldung hinsichtlich des Verfahrensschrittes a) mit umfasst werden.

In Verfahrensschritt a) wird mindestens eine monovinylaromatische Verbindung und mindestens ein Vernetzer eingesetzt. Es ist jedoch auch möglich, Mischungen zweier oder mehrerer monovinylaromatischer Verbindungen und Mischungen zweier oder mehrerer Vernetzer einzusetzen.

Als monovinylaromatische Verbindung wird Styrol oder Mischungen aus Styrol mit Vinyltoluol, Ethylstyrol, α-Methylstyrol, Chlorstyrol, Chlormethylstyrol, Acrylsäurealkylester und Methacrylsäurealkylester eingesetzt.

Bevorzugte Vernetzer im Sinne der vorliegenden Erfindung sind für Verfahrensschritt a) multifunktionelle ethylenisch ungesättigte Verbindungen wie beispielsweise Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat.

Die Vernetzer werden im allgemeinen in Mengen von 1-20 Gew.-%, vorzugsweise 2-12 Gew.-%, besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In Verfahrensschritt a) kommen mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die mikroverkapselten Monomertröpfchen enthalten einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril).

Die Initiatoren werden im allgemeinen in Mengen von 0,05 bis 2,5 Gew.-%, vorzugsweise 0,1 bis 1,5 Gew.-%, bezogen auf die Monomeren-Mischung, angewendet.

Als weitere Zusätze in den mikroverkapselten Monomertröpfchen können gegebenenfalls Porogene verwendet werden, um im kugelförmigen Polymerisat eine vernetzte makroporöse Struktur zu erzeugen. Hierfür sind organische Lösungsmittel geeignet, die das entstandene Polymerisat schlecht lösen bzw. quellen. Beispielhaft seien Hexan, Octan, Isooctan, Isododecan, Methylethylketon, Butanol oder Octanol und deren Isomeren genannt.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von ±10 % des häufigsten Durchmessers um den häufigsten Durchmesser herum liegt.

Zum Beispiel bei einem Stoff mit häufigstem Durchmesser von 0,5 mm liegen mindestens 90 Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,7 mm und 0,63 mm.

Die Begriffe mikroporös oder gelförmig bzw. makroporös sind in der Fachliteratur bereits eingehend beschrieben worden.

Bevorzugte Perlpolymerisate im Sinne der vorliegenden Erfindung, hergestellt durch Verfahrensschritt a), weisen eine makroporösen struktur auf.

Die Ausbildung monodisperser, makroporöser Perlpolymerisate kann beispielsweise durch Zusatz von Inertmaterialien (Porogene) zu der Monomermischung bei der Polymerisation erfolgen. Als solche sind vor allem organische Substanzen geeignet, die sich im Monomeren lösen, das Polymerisat aber schlecht lösen bzw. quellen (Fällmittel für Polymere) beispielsweise aliphatische Kohlenwasserstoffe (Farbenfabriken Bayer DBP 1045102, 1957; DBP 1113570, 1957) .

In US-A 4 382 124 werden als Porogen beispielsweise Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Das mikroverkapselte Monomertröpfchen kann gegebenenfalls auch bis zu 30 Gew.-% (bezogen auf das Monomer) vernetztes oder unvemetztes Polymer enthalten. Bevorzugte Polymere leiten sich aus den vorgenannten Monomeren, besonders bevorzugt von Styrol, ab.

Die mittlere Teilchengröße der verkapselten Monomertröpfchen beträgt 10 - 1000 µm, vorzugsweise 100 - 1000 µm. Das erfindungsgemäße Verfahren ist auch zur Herstellung monodisperser kugelförmiger Polymerisate gut geeignet. Bei der Herstellung der monodispersen Perlpolymerisate gemäß Verfahrensschritt a) kann die wässrige Phase gegebenenfalls einen gelösten Polymerisationsinhibitor enthalten. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxyl-aminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm. Die Polymerisation der mikroverkapselten Monomertröpfchen zum kugelförmigen, monodispersen Perlpolymerisat erfolgt, wie bereits oben erwähnt, in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)-acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.%.

Die Polymerisation zum kugelförmigen, monodispersen Perlpolymerisat in Verfahrensschritt a) kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im allgemeinen zwischen 50 bis 180°C, vorzugsweise zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Im Verfahrensschritt b) wird zunächst das Amidomethylierungsreagens hergestellt. Dazu wird beispielsweise ein Phthalimid oder ein Phthalimidderivat in einem Lösungsmittel gelöst und mit Formalin versetzt. Anschließend wird unter Wasserabspaltung hieraus ein Bis(phthalimido)ether gebildet. Bevorzugte Phthalimidderivate im Sinne der vorliegenden Erfindung sind Phthalimid selber oder substituierte Phthalimide, beispielsweise Methylphthalimid.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Bis(phthalimido)ether kondensiert. Als Katalysator wird hierbei Oleum, Schwefelsäure oder Schwefeltrioxid eingesetzt.

Verfahrensschritt b) wird bei Temperaturen zwischen 20 bis 120°C, bevorzugt 50 bis 100°C, besonders bevorzugt 60 bis 90°C durchgeführt.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen von Natriumhydroxid bei Temperaturen zwischen 100 und 250°C, vorzugsweise 120 - 190°C. Die Konzentration der Natronlauge liegt im Bereich von 10 bis 50 Gew.-%, vorzugsweise 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende aminomethylierte Perlpolymerisat wird schließlich mit vollentsalztem Wasser alkalifrei gewaschen.

Im Verfahrensschritt d) erfolgt die Herstellung der erfindungsgemäßen Anionenaustauscher durch Umsetzung des Aminomethylgruppen-haltigen monodispersen, vernetzten, vinylaromatischen Grundpolymerisates in Suspension mit Alkylierungsmitteln, wobei als Suspensionsmedium Wasser oder Mineralsäuren eingesetzt werden, bei Temperaturen von 20 bis 150°C und bei Drücken von Normaldruck bis 6 bar.

Bevorzugte Alkylierungsmittel im Sinne der vorliegenden Erfindung sind Alkylhalogenide, Halogenalkohole, Alkylsulfate, Dialkylsulfate, Alkyloxide, Leuckart-Wallach-Reagenzien oder Kombinationen dieser Alkylierungsmittel untereinander bzw. nacheinander.

Besonders bevorzugt werden Chlormethan, Ethylenoxid, Propylenoxid sowie die Leuckert-Wallach-Reagenzien oder deren Kombination eingesetzt. Beispielhaft werden Leuckart-Wallach-Reagenzien in Organikum, VEB Deutscher Verlag der Wissenschaften, Berlin 1968, 8. Auflage, Seite 479 beschrieben.

Als Suspensionsmedium werden Wasser oder Mineralsäuren eingesetzt. Gegebenenfalls können aber auch in Abhängigkeit des gewünschten Produktes Basen zugesetzt werden. Bevorzugt wird Wasser eingesetzt. Als Basen kommen gegebenenfalls Natronlauge, Kalilauge oder basische, jedoch nicht nucleophile Amine in Frage.

Der Verfahrensschritt d) wird durchgeführt bei Temperaturen von 20 bis 150°C, bevorzugt von 40 bis 110°C. Verfahrensschritt d) wird bei Drücken von Normaldruck bis 6 bar, bevorzugt bei Normaldruck bis 4 bar durchgeführt.

Weiterhin Gegenstand der vorliegenden Erfindung sind die nach dem erfindungsgemäßen Verfahren hergestellten monodispersen Anionenaustauscher.

Bevorzugt entstehen durch das erfindungsgemäße Verfahren monodisperse Anionenaustauscher mit den funktionellen Gruppen die sich während des Verfahrensschritts d) ausbilden: 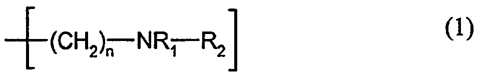 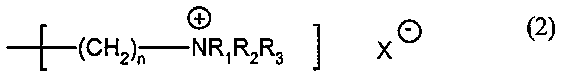 worin
- R₁: für Wasserstoff, eine Alkylgruppe, eine Hydroxyalkylgruppe oder eine Alkoxyalkylgruppe steht,
- R₂: für Wasserstoff, eine Alkylgruppe, eine Alkoxyalkylgruppe oder eine Hydroxyalkylgruppe steht,
- R₃: für Wasserstoff, eine Alkylgruppe, eine Alkoxyalkylgruppe oder eine Hydroxyalkylgruppe steht,
- n: für eine Zah von 1 bis 5, besonders bevorzugt für 1 steht und
- X: für ein anionisches Gegenion, bevorzugt für Cl^{⊖}, Br^{⊖}, OH^{⊖}, NO₃^{⊖} oder SO₄²⁻ steht.

In den Resten R₁, R₂ und R₃ steht Alkoxy bzw. Alkyl jeweils bevorzugt für 1 bis 6 Kohlenstoffatome.

In den erfindungsgemäßen monodispersen Anionenaustauschern trägt jeder aromatische Kern bevorzugt 0,1 bis 2 der obengenannten funktionellen Gruppen (1), (2).

Die erfindungsgemäß hergestellten Anionenaustauscher werden eingesetzt
- zur Entfernung von Anionen aus wässrigen oder organischen Lösungen
- zur Entfernung von Anionen aus Kondensaten
- zur Entfernung von Farbpartikeln aus wässrigen oder organischen Lösungen,
- zur Entfernung von organischen Komponenten aus wässrigen Lösungen, beispielsweise von Huminsäuren aus Oberflächenwasser.

Weiterhin können die erfindungsgemäßen Anionenaustauscher eingesetzt werden zur Reinigung und Aufarbeitung von Wässern in der chemischen Industrie und Elektronikindustrie, insbesondere zur Herstellung von Reinstwasser.

Weiterhin können die erfindungsgemäßen Anionenaustauscher in Kombination mit gelförmigen und/oder makroporösen Kationenaustauschern zur Vollentsalzung wässriger Lösungen und/oder Kondensaten eingesetzt werden.

### Beispiele

### Beispiel 1

### a) Herstellung des monodispersen, makroporösen Perlpolymerisates auf der Basis von Styrol, Divinylbenzol und Ethylstyrol

In einem 10 1 Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertöpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 1b) Herstellung des amidomethylierten Perlpolymerisates

Bei Raumtemperatur werden 2400 ml Dichlorethan, 595 g Phthalimid und 413 g 30,0 gew.-%iges Formalin vorgelegt.Der pH Wert der Suspension wird mit Natronlauge auf 5,5 bis 6 eingestellt. Anschließend wird das Wasser destillativ entfernt. Dann werden 43,6 g Schwefelsäure zudosiert. Das entstehende Wasser wird destillativ entfernt. Der Ansatz wird abgekühlt. Bei 30°C wird 174,4 g 65 %iges Oleum zudosiert, anschließend 300,0 g monodisperses Perlpolymerisat gemäß Verfahrensschritt 1a). Die Suspension wird auf 70°C erhitzt und weitere 6 Stunden bei dieser Temperatur gerührt. Die Reaktionsbrühe wird abgezogen, vollentsalztes Wasser wird zudosiert und Restmengen an Dichlorethan werden destillativ entfernt.
Ausbeute an amidomethyliertem Perlpolymerisat : 1820 ml
Elementaranalytische Zusammensetzung: Kohlenstoff : 75,3 Gew.%; Wasserstoff: 4,6 Gew.-%; Stickstoff: 5,75 Gew.-% ;

### 1c) Herstellung des aminomethylierten Perlpolymerisates

Zu 1770 ml amidomethyliertem Perlpolymerisat aus Beispiel 1b) werden 851 g 50 gew.-%ige Natronlauge und 1470 ml vollentsalztes Wasser bei Raumtemperatur hinzudosiert. Die Suspension wird auf 180°C erhitzt und 8 Stunden bei dieser Temperatur gerührt.

Das erhaltene Perlpolymerisat wird mit vollentsalztem Wasser gewaschen.
Ausbeute an aminomethyliertem Perlpolymerisat : 1530 ml
Als Gesamtausbeute - hochgerechnet - ergeben sich 1573 ml
Elementaranalytische Zusammensetzung: Kohlenstoff: 78,2 Gew.-%; Stickstoff: 12,25 Gew.%; Wasserstoff: 8,4 Gew.-%.
Menge an Aminomethylgruppen in mol pro Liter aminomethyliertem Perlpolymerisat: 2,13
Menge an Aminomethylgruppen in mol in der Gesamtausbeute von aminomethyliertem Perlpolymerisat: 3,259

Im statistischen Mittel wurden pro aromatischem Kern, - herrührend aus den Styrol und Divinylbenzoleinheiten - 1,3 Wasserstoffatome durch Aminomethylgruppen substituiert -.

### 1d) Herstellung eines monodispersen schwachbasischen Anionenaustauschers mit Dimethylaminomethylgruppen

Bei Raumtemperatur werden zu 1330 ml aminomethyliertem Perlpolymerisat aus Beispiel 1c) 1995 ml vollentsalztes Wasser und 627 g 29,8 gew.-%ige Formalinlösung hinzudosiert. Der Ansatz wird auf 40°C erwärmt. Anschließend wird in 2 Stunden auf 97°C erwärmt. Hierbei werden insgesamt 337 g 85 gew.-%ige Ameisensäure hinzudosiert.Anschließend wird der pH Wert mit 50 gew.-%iger Schwefelsäure innerhalb von 1 Stunde auf pH 1 eingestellt. Bei pH 1 wird 10 Stunden nachgerührt. Nach dem Abkühlen wird das Harz mit vollentsalztem Wasser gewaschen und mit Natronlauge von Sulfat befreit und in die OH-Form überführt.
Ausbeute an Harz mit Dimethylaminogruppen : 1440 ml
Als Gesamtausbeute - hochgerechnet - ergeben sich 1703 ml
Das Produkt enthält 2,00 mol / Liter Harz Dimethylaminogruppen.

Die Gesamtmenge an Dimethylaminogruppen in mol in der Gesamtausbeute an Produkt mit Dimethylaminogruppen beträgt 3,406.

### Beispiel 2

### Herstellung eines monodispersen mittelstarkbasischen Anionenaustauschers mit Dimethylaminomethylgruppen sowie Trimethylaminomethylgruppen

Bei Raumtemperatur werden 1220 ml Dimethylaminomethylgruppen tragendes Perlpolymerisat aus Beispiel 1d), 1342 ml vollentsalztes Wasser und 30,8 g Chlormethan vorgelegt. Der Ansatz wird auf 40°C erwärmt und 6 Stunden bei dieser Temperatur gerührt.
Ausbeute an Dimethylaminomethyl - sowie Trimethylaminomethylgruppen tragendem Harz : 1670 ml
Als Gesamtausbeute hochgerechnet ergeben sich 2331 ml.
Von den Stickstoffatom-tragenden Gruppen des Produktes liegen 24,8 % als Trimethylaminomethylgruppen und 75,2 % als Dimethylaminomethylgruppen vor.

Die nutzbare Kapazität des Produktes beträgt: 1,12 mol/ Liter Harz.
Stabilität des Harzes im Originalzustand: 98 perfekte Perlen von 100
Stabilität des Harzes nach dem Walztest: 96 perfekte Perlen von 100
Stabilität des Harzes nach dem Quellungsstabilitätstest: 98 perfekte Perlen von 100

94 Volumenprozent der Perlen des Endproduktes besitzen eine Größe zwischen 0,52 und 0,65 mm.

### Beispiel 3

### Herstellung eines monodispersen starkbasischen Anionenaustauschers mit Hydroxyethyldimethylaminomethylgruppen

1230 ml des nach Beispiel 1d) hergestellten Harzes mit Dimethylaminomethylgruppen sowie 660 ml vollentsalztes Wasser werden vorgelegt. Dazu werden in 10 Minuten 230,5 g 2- Chlorethanol dosiert.Der Ansatz wird auf 55°C erhitzt. Durch Zupumpen von 20 gew.-%iger Natronlauge wird ein pH Wert von 9 eingestellt. Es wird 3 Stunden bei pH 9 gerührt, anschließend wird der pH Wert auf 10 mit Natronlauge eingestellt und weitere 4 Stunden bei pH 10 gerührt.Nach dem Abkühlen wird das Produkt in einer Säule mit vollentsalztem Wasser gewaschen, und dann werden 3 Bettvolumen 3 gew.-%iger Salzsäure überfiltriert.
Ausbeute: 1980 ml

Die nutzbare Kapazität des Produktes beträgt: 0,70 mol/ Liter Harz.
Stabilität des Harzes im Originalzustand: 96 perfekte Perlen von 100
Stabilität des Harzes nach dem Walztest: 70 perfekte Perlen von 100
Stabilität des Harzes nach dem Quellungsstabilitätstest: 94 perfekte Perlen von 100

94 Volumenprozent der Perlen des Endproduktes besitzen eine Größe zwischen 0,52 und 0,65 mm.

### Beispiel 4 (Vergleichsbeispiel)

Herstellung monodisperser basischer Anionenaustauscher auf Basis eines Perlpolymerisates nach dem in der EP-A 0 046 535 unter Hinweis auf US-A 3 989 650 dargestellten Verfahren

### 4a) Perlpolymerisat-Herstellung analog zu Beispiel 1a)

### 4b) Herstellung des amidomethylierten Perlpolymerisates

Bei Raumtemperatur werden 2400 ml Dichlorethan, 595 g Phthalimid und 413 g 30,0 gew.%iges Formalin vorgelegt. Der pH Wert der Suspension wird mit Natronlauge auf 5,5 bis 6 eingestellt. Anschließend wird das Wasser destillativ entfernt.

Es wird auf 60°C abgekühlt. Dann werden in 30 Minuten 454 g Essigsäureanhydrid hinzudosiert. Es wird auf Rückflusstemperatur erhitzt und weitere 5 Stunden bei dieser Temperatur gerührt.

Der Ansatz wird auf 60°C abgekühlt. Es werden 300 g Perlpolymerisat gemäß Beispiel 1a) hinzudosiert. Es wird auf Rückflusstemperatur (ca. 90°C) erhitzt und in 4 Stunden bei dieser Temperatur 210 g Schwefelsäure hinzudosiert.

Anschließend wird weitere 6 Stunden bei dieser Temperatur gerührt. Die Reaktionsbrühe wird abgezogen, vollentsalztes Wasser wird hinzu dosiert und Restmengen an Dichlorethan werden destillativ entfernt.
Ausbeute an amidomethyliertem Perlpolymerisat: 1250 ml
Elementaranalytische Zusammensetzung: Kohlenstoff: 78,5 Gew.-%; Wasserstoff: 5,3 Gew.-%; Stickstoff: 4,85 Gew.-% ;

### 4c) Herstellung des aminomethylierten Perlpolymerisates

Zu 1200 ml amidomethyliertem Perlpolymerisat aus Beispiel 4b) werden 505 g 50 gew.-%ige Natronlauge und 1110 ml vollentsalztes Wasser bei Raumtemperatur hinzudosiert. Die Suspension wird auf 180°C erhitzt und 8 Stunden bei dieser Temperatur gerührt.

Das erhaltene Perlpolymerisat wird mit vollentsalztem Wasser gewaschen.
Ausbeute an aminomethyliertem Perlpolymerisat: 950 ml
Als Gesamtausbeute - hochgerechnet - ergeben sich 990 ml

Elementaranalytische Zusammensetzung: Kohlenstoff: 82,5 Gew.-%; Stickstoff: 7,65 Gew.-%; Wasserstoff: 8,2 Gew.-% .
Menge an Aminomethylgruppen in mol pro Liter aminomethylierten Perlpolymerisats: 1,93
Menge an Aminomethylgruppen in mol in der Gesamtausbeute von aminomethyliertem Perlpolymerisat: 1,83

Im statistischen Mittel wurden pro aromatischem Kern - herrührend aus den Styrol und Divinylbenzoleinheiten - 0,79 Wasserstoffatome durch Aminomethylgruppen substituiert - Substitutionsgrad der aromatischen Kerne durch Aminomethylgruppen.

### 4d) Herstellung eines monodispersen schwachbasischen Anionenaustauschers mit Dimethylaminomethylgruppen

Bei Raumtemperatur werden zu 780 ml aminomethyliertes Perlpolymerisat aus Beispiel 4c) 1170 ml vollentsalztes Wasser und 333 g 29,8 gew.-%ige Formalinlösung dosiert. Der Ansatz wird auf 40°C erwärmt. Anschließend wird in 2 Stunden auf 97°C erwärmt. Hierbei werden insgesamt 179,2 g Ameisensäure 85 gew.-%ig hinzu dosiert. Anschließend wird der pH Wert mit 50 gew.-%iger Schwefelsäure innerhalb von 1 Stunde auf pH 1 eingestellt. Bei pH 1 wird 10 Stunden nachgerührt. Nach dem Abkühlen wird das Harz mit vollentsalztem Wasser gewaschen und mit Natronlauge von Sulfat befreit und in die OH-Form überführt.
Ausbeute an Harz mit Dimethylaminogruppen : 1050 ml
Als Gesamtausbeute - hochgerechnet - ergeben sich 1333 ml

Das Produkt enthält 1,87 mol / Liter Harz Dimethylaminogruppen.

Menge an Dimethylaminogruppen in mol in der Gesamtausbeute an dimethylaminomethylgruppentragendem Harz : 2,493.

### Beispiel 5 (Vergleichsbeispiel)

### 5d) Herstellung eines monodispersen mittelstarkbasischen Anionenaustauschers auf Basis eines Perlpolymerisates mit Dimethylaminomethylgruppen sowie Trimethylaminomethylgruppen

Bei Raumtemperatur werden 700 ml Dimethylaminomethylgruppen tragendes Perlpolymerisat aus Beispiel 4d), 780 ml vollentsalztes Wasser und 16,5 g Chlormethan vorgelegt. Der Ansatz wird auf 40°C erwärmt und 6 Stunden bei dieser Temperatur gerührt.
Ausbeute an Dimethylaminomethyl - sowie Trimethylaminomethylgruppen tragendem Harz: 951 ml
Als Gesamtausbeute hochgerechnet ergeben sich 1811 ml.

Von den Stickstoffatom-tragenden Gruppen des Produktes liegen 24,3 % als Trimethylaminomethylgruppen und 75,7 % als Dimethylaminomethylgruppen vor.

Die nutzbare Kapazität des Produktes beträgt: 0,82 mol/ Liter Harz.
Stabilität des Harzes im Originalzustand: 97 perfekte Perlen von 100
Stabilität des Harzes nach dem Walztest: 94 perfekte Perlen von 100
Stabilität des Harzes nach dem Quellungsstabilitätstest: 96 perfekte Perlen von 100

94 Volumenprozent der Perlen des Endproduktes besitzen eine Größe zwischen 0,52 und 0,65 mm.

### Untersuchungsmethoden:

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Bestimmung der Stabilität des Harzes nach dem Walztest

Das zu prüfende Perlpolymerisat wird in gleichmäßiger Schichtdicke zwischen zwei Kunststofftücher verteilt. Die Tücher werden auf eine feste, waagerecht angebrachte Unterlage gelegt und in einer Walzapparatur 20 Arbeitstakten unterworfen. Ein Arbeitstakt besteht aus einer vor und zurück durchgeführten Walzung. Nach dem Walzen werden an repräsentativen Mustern an 100 Perlen durch Auszählen unter dem Mikroskop die Anzahl der unversehrten Perlen ermittelt.

### Quellungsstabilitätstest

In eine Säule werden 25 ml Anionenaustauscher in der Chloridform eingefüllt. Nacheinander werden 4 gew.-%ige wässrige Natronlauge, vollentsalztes Wasser, 6 gew.-%ige Salzsäure und nochmals voll entsalztes Wasser in die Säule gegeben, wobei die Natronlauge und die Salzsäure von oben durch das Harz fließen und das Edelwasser von unten durch das Harz gepumpt wird. Die Behandlung erfolgt zeitgetaktet über ein Steuergerät. Ein Arbeitszyklus dauert 1h. Es werden 20 Arbeitszyklen durchgeführt. Nach Ende der Arbeitszyklen werden von dem Harzmuster 100 Perlen ausgezählt. Ermittelt wird die Anzahl der perfekten Perlen, die nicht durch Risse oder Absplitterungen geschädigt sind.

### Nutzbare Kapazität von stark basischen und mittelstark basischen Anionenaustauschern

1000 ml Anionenaustauscher in der Chloridform, d.h. das Stickstoffatom trägt als Gegenion Chlorid, werden in eine Glassäule gefüllt. 2500 ml 4 gew.%ige Natronlauge werden über das Harz in 1 Stunde filtriert. Anschließend wird mit 2 Litern entbastem d.h. entkationisiertem Wasser gewaschen. Dann wird über das Harz mit einer Geschwindigkeit von 10 Litern pro Stunde Wasser mit einer Gesamtanionenhärte von 25 Grad deutscher Härte filtriert. Im Eluat werden die Härte sowie die Restmenge an Kieselsäure analysiert. Bei einem Rest-Kieselsäuregehalt von ≥ 0,1 mg/l ist die Beladung beendet.

Aus der Menge Wasser, die über das Harz filtriert wird, der Gesamtanionenhärte des überfiltrierten Wassers sowie der Menge an eingebautem Harz wird ermittelt wieviel Gramm CaO pro Liter Harz aufgenommen werden. Die Grammenge an CaO stellt die nutzbare Kapazität des Harzes in der Einheit Gramm CaO pro Liter Anionenaustauscher dar.

### Volumenspiel Chlorid / OH - Form

100 ml basische Gruppen tragender Anionenaustauscher werden mit vollentsalztem Wasser in eine Glassäule gespült. Es werden in 1 Stunde und 40 Minuten 1000 ml 3 gew.-%ige Salzsäure überfiltriert. Anschließend wird das Harz mit vollentsalztem Wasser chloridfrei gewaschen. Das Harz wird in ein Stampfvolumeter unter vollentsalztem Wasser gespült und bis zur Volumenkonstanz eingerüttelt - Volumen V 1 des Harzes in der Chloridform.

Das Harz wird wiederum in die Säule überführt. Es werden 1000 ml 2 gew.-%ige Natronlauge überfiltriert. Anschließend wird das Harz mit vollentsalztem Wasser bis auf einen pH Wert von 8 im Eluat alkalifrei gewaschen. Das Harz wird in ein Stampfvolumeter unter vollentsalztem Wasser gespült und bis zur Volumenkonstanz eingerüttelt - Volumen V2 des Harzes in der freien Basenform - (OH - Form ).
Berechnung : V1 - V2 = V3
V3 : Val/100 = Quellungsspiel Chlorid / OH - Form in %

### Bestimmung der Menge an basischen Aminomethylgruppen im aminomethylierten, vernetzten Polystyrol Perlpolymerisat

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml vollentsalztem Wasser und 100 ml In Salzsäure versetzt. Die Suspension wird 30 Minuten gerührt und anschließend in eine Glassäule gefüllt. Die Flüssigkeit wird abgelassen. Es werden weitere 100 ml In Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminomethyliertem Harz errechnet sich nach folgender Formel: ( 200 - V ) · 20 = mol Aminomethylgruppen pro Liter Harz.

### Bestimmung des Substitutionsgrades der aromatischen Kerne des vernetzten Perlpolymerisates durch Aminomethylgruppen

Die Menge Aminomethylgruppen in der Gesamtmenge des aminomethylierten Harzes wird nach obiger Methode bestimmt.

Aus der Menge an eingesetztem Perlpolymerisat - A in Gramm - wird durch Division mit dem Molekulargewicht die in dieser Menge vorliegende Molmenge an Aromaten errechnet.

Beispielsweise werden aus 300 Gramm Perlpolymerisat 950 ml aminomethyliertes Perlpolymerisat hergestellt mit einer Menge von 1,8 mol/l Aminomethylgruppen.

950 ml aminomethyliertes Perlpolymerisat enthalten 2,82 mol Aromaten.

Pro Aromat liegen dann 1,8 / 2,82 = 0,64 mol Aminomethylgruppen vor.

Der Substitutionsgrad der aromatischen Kerne des vernetzten Perlpolymerisates durch Aminomethylgruppen beträgt 0,64.

**Tabelle 1**

| Kenndaten zur Herstellung von Anionenaustauschern nach dem erfindungsgemäßen Verfahren sowie in Vergleichsversuchen nach EP-A 0 046 535 bzw. US-A 3 989 650 | | | | | | |
|---|---|---|---|---|---|---|
| Beispiel | Ausbeute Verfahren sschritt b) | Substitutionsgrad der aromatischen Kerne des Perlpolymerisates mit Aminomethylgruppen | Gesamtmenge an Aminomethylgruppen in Verfahrensschritt c) in mol | Ausbeute an Produkt mit Dimethylaminomethylgruppen in ml/g Perlpolymerisat | Ausbeute an Produkt mit Dimethyl- und Trimethylaminomethylgruppen in ml/g Perlpolymerisat | Nutzbare Kapazität in mol/l Harz Beispiel 2 gegen Beispiel 5 |
| Erfindungsgemäß Beispiel 1 und 2 | 5,24 | 1,30 | 3,351 | 5,68 | 7,77 | 1,12 |
| Vergleichsbeispiel nach EP-A 0 046 535 bzw. US-A 3 989 650 Beispiel 4 und 5 | 3,30 | 0,79 | 1,909 | 4,44 | 5,98 | 0,82 |

Es zeigt sich überraschenderweise, dass das erfindungsgemäße Verfahren im Vergleich zu den in EP-A 0 046 535 bzw. US-A 3 989 650 beschriebenen Verfahren die Herstellung von Anionenaustauschern unterschiedlicher Basizität in höherer Ausbeute, mit einer größeren Menge an stickstoffhaltigen Gruppen pro aromatischem Kern, mit einem höheren Aufnahmevermögen für Anionen unterschiedlicher Art in einem abwasserarmen Verfahren ermöglicht.

## Patentansprüche

1. Verfahren zur Herstellung monodisperser Anionenaustauscher, **dadurch gekennzeichnet, dass** man
a) mit einem Komplexkoazervat mikroverkapselte Monomertröpfchen mit einer mittleren Teilchengröße von 10 - 1000 µm aus mindestens einer monovinylaromatischen Verbindung und mindestens einem Vernetzer in Gegenwart mindestens eines Schutzkolloids und in Gegenwart mindestens eines Initiators zu einem monodispersen, vernetzten Perlpolymerisat umsetzt, wobei als monovinylaromatische Verbindung Styrol eingesetzt wird,
b) dieses monodisperse, vernetzte Perlpolymerisat in einem inerten Lösungsmittel, das geeignet ist das Polymer zu quellen, bei Temperaturen zwischen 20 bis 120°C mit einem Bis(phthalimido)ether amidomethyliert,
c) das amidomethylierte Perlpolymerisat mit einer wässrigen oder alkoholischen Lösung von Natriumhydroxid bei Temperaturen zwischen 100 und 250°C zu aminomethyliertem Perlpolymerisat umsetzt, wobei die Konzentration der Natronlauge im Bereich von 10 bis 50 Gew.-% liegt und das entstehende aminomethylierte Perlpolymerisat mit vollentsalztem Wasser alkalifrei gewaschen wird und
d) das aminomethylierte Perlpolymerisat durch Umsetzung in Suspension mit Alkylierungsmitteln, wobei als Suspensionsmedium Wasser oder Mineralsäuren eingesetzt werden, bei Temperaturen von 20 bis 150°C und bei Drücken von Normaldruck bis 6 bar alkyliert.

2. Verfahren gemäß Anspruch 1, **dadurch gekennzeichnet, dass** als Komplexkoazervat Polyester, natürliche und synthetische Polyamide, Polyurethane, Polyharnstoffe eingesetzt werden.

3. Verfahren gemäß der Ansprüche 1 oder 2, **dadurch gekennzeichnet, dass** die Monomertröpfchen Porogene enthalten und nach der Polymerisation makroporöse, vernetzte Perlpolymerisate bilden.

4. Verfahren gemäß der Ansprüche 1 bis 3, **dadurch gekennzeichnet, dass** in Verfahrensschritt a) ein Polymerisationsinhibitor eingesetzt wird.

5. Verfahren gemäß Anspruch 1, **dadurch gekennzeichnet, dass** als Schutzkolloide Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureester eingesetzt werden.

6. Verfahren gemäß Anspruch 1, **dadurch gekennzeichnet, dass** als Vernetzer Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat oder Allylmethacrylat eingesetzt werden.

7. Verfahren gemäß Anspruch 1, **dadurch gekennzeichnet, dass** als Initiator Peroxyverbindungen wie Dibenzoylperoxid, Dilauroylperoxid, Bis-(p-chlorbenzoyl)-peroxid, Dicyclohexylperoxydicarbonat, tert.-Butylperoctoat, tert.-Butylperoxy-2-ethyl-hexanoat, 2,5-Bis-(2-ethylhexanoylperoxy)-2,5-dimethylhexan oder tert.-Amylperoxy-2-ethylhexan sowie Azoverbindungen wie 2,2'-Azobis(isobutyronitril) oder 2,2'-Azobis-(2-methylisobutyronitril) eingesetzt werden.

8. Verfahren gemäß Anspruch 1, **dadurch gekennzeichnet, dass** der Bis(phthalimido)ether aus Phthalimid oder seinen Derivaten und Formalin hergestellt wird.

9. Verfahren gemäß Anspruch 8, **dadurch gekennzeichnet, dass** die Reaktion des Bis(phthalimido)ethers mit dem Perlpolymerisat in Gegenwart von Oleum, Schwefelsäure oder Schwefeltrioxid stattfindet.

10. Monodisperse Anionenaustauscher hergestellt nach einem Verfahren gemäß Anspruch 1.

11. Monodisperse Anionenaustauscher gemäß Anspruch 10, **dadurch gekennzeichnet, dass** diese eine makroporöse Struktur aufweisen.

12. Monodisperse Anionenaustauscher gemäß der Ansprüche 10 oder 11, **dadurch gekennzeichnet, dass** diese die funktionellen Gruppen 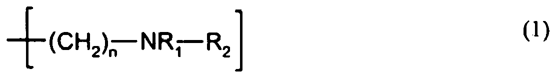 oder 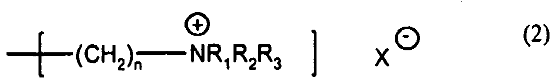 worin
R₁ für Wasserstoff, eine Alkylgruppe, eine Hydroxyalkylgruppe oder eine Alkoxyalkylgruppe steht,
R₂ für Wasserstoff, eine Alkylgruppe, eine Alkoxyalkylgruppe oder eine Hydroxyalkylgruppe steht,
R₃ für Wasserstoff, eine Alkylgruppe, eine Alkoxyalkylgruppe oder eine Hydroxyalkylgruppe steht,
n für eine ganze Zahl von 1 - bis 5 steht und
X für ein anionisches Gegenion steht,
tragen.

13. Verwendung der monodispersen Anionenaustauscher gemäß der Ansprüche 10 bis 12 zur Entfernung von Anionen, Farbpartikeln oder organischen Komponenten aus wässrigen oder organischen Lösungen und Kondensaten.

14. Verfahren zur Entfernung von Anionen, Farbpartikeln oder organischen Komponenten aus wässrigen oder organischen Lösungen und Kondensaten, **dadurch gekennzeichnet, dass** man monodisperse Anionenaustauscher gemäß der Ansprüche 10 bis 12 einsetzt.

15. Verwendung der monodispersen Anionenaustauscher gemäß der Ansprüche 10 bis 12 zur Reinigung und Aufarbeitung von Wässern der chemischen Industrie und der Elektronik-Industrie.

16. Verfahren zur Reinigung und Aufarbeitung von Wässern der chemischen Industrie und der Elektronik-Industrie, **dadurch gekennzeichnet, dass** man monodisperse Anionenaustauscher gemäß der Ansprüche 10 bis 12 einsetzt.

17. Verwendung der monodispersen Anionenaustauscher gemäß der Ansprüche 10 bis 12 zur Vollentsalzung wässriger Lösungen und/oder Kondensate, **dadurch gekennzeichnet, dass** man diese in Kombination mit gelförmigen und/oder makroporösen Kationenaustauschern einsetzt.

18. Verfahren zur Vollentsalzung wässriger Lösungen und/oder Kondensate, **dadurch gekennzeichnet, dass** man monodisperse Anionenaustauscher gemäß der Ansprüche 10 bis 12 in Kombination mit gelförmigen und/oder makroporösen Kationenaustauschern einsetzt.

19. Kombinationen von monodispersen Anionenaustauschern gemäß der Ansprüche 10 bis 12 mit gelförmigen und/oder makroporösen Kationenaustauschern zur Vollentsalzung wässriger Lösungen und/oder Kondensate.

20. Amidomethylierte Perlpolymerisate hergestellt nach den Verfahrensschritten a) und b) gemäß Anspruch 1.

21. Aminomethylierte Perlpolymerisate hergestellt nach den Verfahrensschritten a), b) und c) gemäß Anspruch 1.

## Claims

1. Process for preparing monodisperse anion exchangers, **characterized in that**
a) monomer droplets microencapsulated with a complex coacervate and having an average particle size of from 10 to 1000 µm made of at least one monovinylaromatic compound and at least one crosslinking agent in the presence of at least one protective colloid and in the presence of at least one initiator are reacted to give a monodisperse, crosslinked bead polymer, where styrene is used as monovinylaromatic compound,
b) the said monodisperse, crosslinked bead polymer is amidomethylated with a bis(phthalimido) ether at temperatures from 20 to 120°C in an inert solvent which is suitable for swelling the polymer,
c) the amidomethylated bead polymer is reacted with an aqueous or alcoholic solution of sodium hydroxide at temperatures from 100 to 250°C to give aminomethylated bead polymer, where the concentration of the sodium hydroxide solution is in the range from 10 to 50% by weight and the resultant aminomethylated bead polymer is washed with demineralized water until free from alkali, and
d) the aminomethylated bead polymer is alkylated at temperatures from 20 to 150°C and at pressures from atmospheric pressure to 6 bar via reaction in suspension with alkylating agents, where suspension medium used comprises water or mineral acids.

2. Process according to Claim 1, **characterized in that** complex coacervate used comprises polyesters, natural and synthetic polyamides, polyurethanes, polyureas.

3. Process according to Claims 1 and 2, **characterized in that** the monomer droplets comprise porogens and, after the polymerization, form macroporous, crosslinked bead polymers.

4. Process according to Claims 1 to 3, **characterized in that** a polymerization inhibitor is used in process step a).

5. Process according to Claim 1, **characterized in that** the protective colloids used comprise gelatine, starch, polyvinyl alcohol, polyvinylpyrrolidone, polyacrylic acid, polymethacrylic acid or copolymers made from (meth)acrylic acid or (meth)acrylate.

6. Process according to Claim 1, **characterized in that** the crosslinking agents used comprise divinylbenzene, divinyltoluene, trivinylbenzene, divinylnaphthalene, trivinylnaphthalene, 1,7-octadiene, 1,5-hexadiene, ethylene glycol dimethacrylate, trimethylolpropane trimethacrylate or allyl methacrylate.

7. Process according to Claim 1, **characterized in that** the initiator used comprises peroxy compounds, such as dibenzoyl peroxide, dilauroyl peroxide, bis-(p-chlorobenzoyl) peroxide, dicyclohexyl peroxydicarbonate, tert-butyl peroctoate, tert-butyl peroxy-2-ethyl-hexanoate, 2,5-bis-(2-ethylhexanoylperoxy)-2,5-dimethylhexane or tert-amylperoxy-2-ethylhexane, or else azo compounds, such as 2,2'-azobis(isobutyronitrile) or 2,2'-azobis-(2-methylisobutyronitrile).

8. Process according to Claim 1, **characterized in that** the bis(phthalimido) ether is prepared from phthalimide or from its derivatives and formalin.

9. Process according to Claim 8, **characterized in that** the reaction of the bis(phthalimido) ether with the bead polymer takes place in the presence of oleum, sulphuric acid or sulphur trioxide.

10. Monodisperse anion exchangers prepared by a process according to Claim 1.

11. Monodisperse anion exchangers according to Claim 10, **characterized in that** these have a macroporous structure.

12. Monodisperse anion exchangers according to Claims 10 and 11, **characterized in that** these have the functional groups 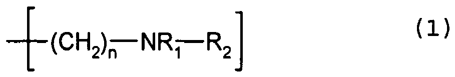 or 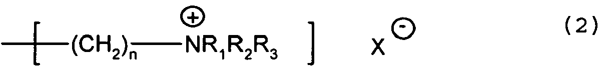 where
R₁ is hydrogen, an alkyl group, a hydroxyalkyl group or an alkoxyalkyl group,
R₂ is hydrogen, an alkyl group, an alkoxyalkyl group or a hydroxyalkyl group,
R₃ is hydrogen, an alkyl group, an alkoxyalkyl group or a hydroxyalkyl group,
n is an integer from 1 to 5, and
X is an anionic counterion.

13. Use of the monodisperse anion exchangers according to Claims 10 to 12 for removing anions, colour particles or organic components from aqueous or organic solutions or condensates.

14. Process for removing anions, colour particles or organic components from aqueous or organic solutions or condensates, **characterized in that** use is made of monodisperse anion exchangers according to Claims 10 to 12.

15. Use of the monodisperse anion exchangers according to Claims 10 to 12 for purification and treatment of water in the chemical industry or the electronics industry.

16. Process for purification and treatment of water in the chemical industry or the electronics industry, **characterized in that** use is made of monodisperse anion exchangers according to Claims 10 to 12.

17. Use of the monodisperse anion exchangers according to Claims 10 to 12 for deionizing aqueous solutions and/or condensates, **characterized in that** these are used in combination with gel-type and/or macroporous cation exchangers.

18. Process for deionizing aqueous solutions and/or condensates, **characterized in that** use is made of monodisperse anion exchangers according to Claims 10 to 12 in combination with gel-type and/or macroporous cation exchangers.

19. Combinations of monodisperse anion exchangers according to Claims 10 to 12 with gel-type and/or macroporous cation exchangers for deionizing aqueous solutions and/or condensates.

20. Amidomethylated bead polymers prepared by the process steps a) and b) according to Claim 1.

21. Aminomethylated bead polymers prepared by the process steps a), b) and c) according to Claim 1.

## Revendications

1. Procédé de fabrication d'échangeurs d'anions monodispersés, **caractérisé en ce que**
a) des gouttes de monomères microencapsulées avec un coacervat complexe d'une taille de particule moyenne de 10 à 1 000 µm constituées d'au moins un composé monovinylaromatique et d'au moins un agent de réticulation sont mises en réaction en présence d'au moins un colloïde protecteur et en présence d'au moins un initiateur pour former un polymère perlé réticulé monodispersé, le styrène étant utilisé en tant que composé monovinylaromatique,
b) ce polymère perlé réticulé monodispersé est amidométhylé dans un solvant inerte, qui est approprié pour faire gonfler le polymère, à des températures comprises entre 20 et 120 °C, avec un bis(phtalimido)éther,
c) le polymère perlé amidométhylé est mis en réaction avec une solution aqueuse ou alcoolique d'hydroxyde de sodium à des températures comprises entre 100 et 250 °C pour former un polymère perlé aminométhylé, la concentration de la soude caustique étant dans la plage allant de 10 à 50 % en poids et le polymère perlé aminométhylé formé étant lavé avec de l'eau entièrement dessalée pour être exempt d'alcalis, et
d) le polymère perlé aminométhylé est alkylé par mise en réaction en suspension avec des agents d'alkylation, de l'eau ou des acides minéraux étant utilisés en tant que milieu de suspension, à des températures de 20 à 150 °C et à des pressions de la pression normale à 6 bar.

2. Procédé selon la revendication 1, **caractérisé en ce que** des polyesters, des polyamides naturels et synthétiques, des polyuréthanes, des polyurées sont utilisés en tant que coacervat complexe.

3. Procédé selon la revendication 1 ou 2, **caractérisé en ce que** les gouttes de monomères contiennent des porogènes et forment après la polymérisation des polymères perlés réticulés macroporeux.

4. Procédé selon les revendications 1 à 3, **caractérisé en ce qu'**un inhibiteur de polymérisation est utilisé à l'étape de procédé a).

5. Procédé selon la revendication 1, **caractérisé en ce que** de la gélatine, de l'amidon, de l'alcool polyvinylique, de la polyvinylpyrrolidone, de l'acide polyacrylique, de l'acide polyméthacrylique ou des copolymères d'acide (méth)acrylique ou des esters d'acide (méth)acrylique sont utilisés en tant que colloïdes protecteurs.

6. Procédé selon la revendication 1, **caractérisé en ce que** le divinylbenzène, le divinyltoluène, le trivinylbenzène, la divinylnaphtaline, la trivinylnaphtaline, le 1,7-octadiène, le 1,5-hexadiène, le diméthacrylate d'éthylène glycol, le triméthacrylate de triméthylolpropane ou le méthacrylate d'allyle sont utilisés en tant qu'agent de réticulation.

7. Procédé selon la revendication 1, **caractérisé en ce que** des composés de peroxy tels que le peroxyde de dibenzoyle, le peroxyde de dilauroyle, le peroxyde de bis-(p-chlorobenzoyle), le peroxydicarbonate de dicyclohexyle, le peroctoate de tert.-butyle, le peroxy-2-éthyl-hexanoate de tert.-butyle, le 2,5-bis-(2-éthylhexanoylperoxy)-2,5-diméthylhexane ou le tert.- amylperoxy-2-éthylhexane, ainsi que des composés azo tels que le 2,2'-azobis(isobutyronitrile) ou le 2,2'-azobis-(2-méthylisobutyronitrile) sont utilisés en tant qu'initiateur.

8. Procédé selon la revendication 1, **caractérisé en ce que** le bis(phtalimido)éther est fabriqué à partir de phtalimide ou ses dérivés et de formaline.

9. Procédé selon la revendication 8, **caractérisé en ce que** la réaction du bis(phtalimido)éther avec le polymère perlé a lieu en présence d'oléum, d'acide sulfurique ou de trioxyde de soufre.

10. Échangeurs d'anions monodispersés fabriqués par un procédé selon la revendication 1.

11. Échangeurs d'anions monodispersés selon la revendication 10, **caractérisés en ce que** ceux-ci présentent une structure macroporeuse.

12. Échangeurs d'anions monodispersés selon la revendication 10 ou 11, **caractérisés en ce que** ceux-ci portent les groupes fonctionnels 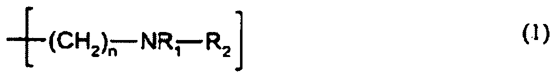 ou 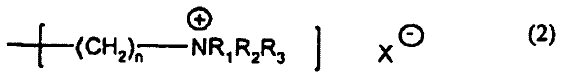 dans lesquels
R₁ représente l'hydrogène, un groupe alkyle, un groupe hydroxyalkyle ou un groupe alcoxyalkyle,
R₂ représente l'hydrogène, un groupe alkyle, un groupe alcoxyalkyle ou un groupe hydroxyalkyle,
R₃ représente l'hydrogène, un groupe alkyle, un groupe alcoxyalkyle ou un groupe hydroxyalkyle,
n représente un nombre entier de 1 à 5, et
X représente un contre-ion anionique.

13. Utilisation des échangeurs d'anions monodispersés selon les revendications 10 à 12 pour l'élimination d'anions, de particules colorées ou de composants organiques de solutions et condensats aqueux ou organiques.

14. Procédé d'élimination d'anions, de particules colorées ou de composants organiques de solutions et condensats aqueux ou organiques, **caractérisé en ce que** des échangeurs d'anions monodispersés selon les revendications 10 à 12 sont utilisés.

15. Utilisation des échangeurs d'anions monodispersés selon les revendications 10 à 12 pour la purification et le conditionnement d'eaux de l'industrie chimique et de l'industrie électronique.

16. Procédé de purification et de conditionnement d'eaux de l'industrie chimique et de l'industrie électronique, **caractérisé en ce que** des échangeurs d'anions monodispersés selon les revendications 10 à 12 sont utilisés.

17. Utilisation des échangeurs d'anions monodispersés selon les revendications 10 à 12 pour le dessalage total de solutions et/ou condensats aqueux, **caractérisée en ce que** ceux-ci sont utilisés en combinaison avec des échangeurs de cations en forme de gel et/ou macroporeux.

18. Procédé de dessalage total de solutions et/ou condensats aqueux, **caractérisé en ce que** des échangeurs d'anions monodispersés selon les revendications 10 à 12 sont utilisés en combinaison avec des échangeurs de cations en forme de gel et/ou macroporeux.

19. Combinaisons d'échangeurs d'anions monodispersés selon les revendications 10 à 12 avec des échangeurs de cations en forme de gel et/ou macroporeux pour le dessalage total de solutions et/ou condensats aqueux.

20. Polymères perlés amidométhylés fabriqués par les étapes des procédés a) et b) selon la revendication 1.

21. Polymères perlés aminométhylés fabriqués par les étapes des procédés a), b) et c) selon la revendication 1.
